# EUROPEAN PATENT APPLICATION

(11) **EP 4 306 495 A1**
(43) Date of publication of application: **17.01.2024**
(21) Application number: 22184464.0
(22) Date of filing: 12.07.2022
(51) Int. Cl.: C04B 24/26, C04B 28/04, C04B 103/40

(54) **COPOLYMERS OF CARBOXYLATES AND POLYETHERS COMPRISING POLYETHER SIDE CHAINS OF DIFFERENT LENGTH, AND USE THEREOF IN MINERAL BINDER COMPOSITIONS**

(71) Applicant: Sika Technology AG, 6340 Baar (CH)
(72) Inventor: GLAUS, Joachim, 8320 Fehraltdorf (CH); WEIDMANN, Jürg, 8404 Winterthur (CH); ZIMMERMANN, Jörg, 8400 Winterthur (CH)
(74) Representative: Sika Patent Attorneys

(57) **Abstract**

The present invention relates to copolymers, in particular dispersants for mineral binders, comprising or consisting of
(i) monomeric units A of the general formula (I) 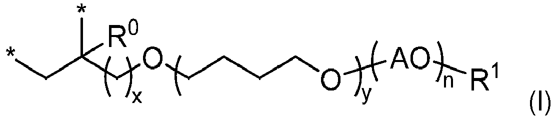 (ii) monomeric units B of the general formula (II) 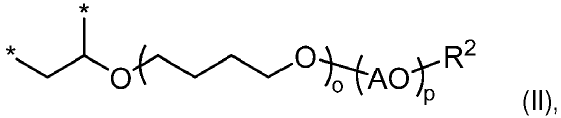 and
(iii) monomeric units C of the general formula (III)

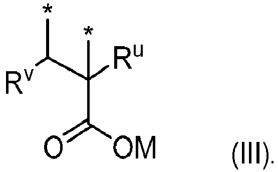

The present invention also relates to the use of such copolymers as plasticizers for mineral binder compositions. Especially, copolymers of the present invention have been found to yield a high initial slump flow of mineral binder compositions and to retain a high slump flow thereof over longer periods of time.

## Description

### Technical Field

The present invention relates to copolymers comprising at least structural motives of two polyethers of different chain length as well as carboxylates. The present invention also relates to the use of such copolymers as plasticizers for mineral binder compositions. Especially, copolymers of the present invention have been found to yield a high initial slump flow of mineral binder compositions and to retain a high slump flow thereof over longer periods of time.

### Background of the invention

Copolymers of polycarboxylic acid and alkoxylated, ethylenically unsaturated alcohols are known for many years as dispersion aids for aqueous dispersions, especially for aqueous dispersions of mineral binders. Such copolymers are frequently being called polycarboxylate ethers (PCE). PCE act as superplasticizers and reduce the water needed to achieve a certain level of fluidity of a given uncured mineral binder composition. A reduction of water in mineral binder compositions, especially in cementitious compositions, is desirable as it leads to less segregation of solid components in the uncured composition and to an increased compressive strength of the cured composition.

WO 2016/074984 (BASF SE) teaches PCE which are copolymers having polyether side chains of different length where one side chain is short (5 - 35 alkylene oxide repeating units) and the other side chain significantly longer (45 - 150 alkylene oxide repeating units). In particular, WO2016/074984 is concerned with copolymers derived from alkoxylated hydroxybutylvinyl ether monomers.

CN 103483504 (Sichuan Tongzhou Chem Tech Co Ltd) discloses PCE which are copolymers comprising two different alkenyl polyethers and their production, the copolymers being derived from mixtures of ethoxylated methallyl alcohol and ethoxylated isoprenyl alcohol. Additionally, the number of repeating units of the copolymer's side chains is 32 - 44 where units derived from ethoxylated methallyl alcohol are present and is 52 - 62 where units derived from ethoxylated isoprenyl alcohol are present.

The PCE-type copolymers described in the prior art are not in all cases the best choice as plasticizers for mineral binder composition. One reason is that mineral binder compositions have a large variation in possible components. Different mineral binders used, different aggregates used, different mix ratios of components, etc. may require different copolymers as plasticizers. This is especially the case with the more widespread use of manufactured sand and high alkali concrete. Another reason is that many PCE-type copolymers lead to a reduction in the development of compressive strength and even to a lower final compressive strength of cured mineral binder compositions. Lower compressive strength is normally not desired. There is thus a constant need for improved PCE-type copolymers to influence the water demand and/or the rheology of mineral binder compositions.

### Summary of the invention

It is an objective of the present invention to provide PCE-type copolymers suitable as superplasticizers for mineral binder compositions, especially for cementitious binder compositions. Specifically, the PCE-type copolymers
(i) should achieve a high initial slump flow of a mineral binder composition at a given mix ratio with water, and/or
(ii) should achieve a minimal loss of slump flow over time of a given mineral binder composition mixed with water, and/or
(iii) should lead to a higher compressive strength of cured mineral binder compositions as compared to the same mineral binder compositions but having a PCE-type copolymer of the state of the art.

It has surprisingly been found that copolymers as claimed in claim 1 can solve one or more of these objectives.

In particular, it has been found that copolymers derived from a combination of alkoxylated, ethylenically unsaturated alcohols with medium chain length (20 - 60 alkylene oxide repeating units) and of alkoxylated, ethylenically unsaturated alcohols with long chain length (65 - 150 alkylene oxide repeating units) leads to high initial slump flow, good retention of slump flow over time, and increased compressive strength. This is specifically the case, where the ethylenically unsaturated alcohol with medium degree of alkoxylation (20 - 60 repeating units) is selected from vinyl alcohol, vinyl-4-hydroxybutyl alcohol, (meth)allyl alcohol, or isoprenyl alcohol and where the ethylenically unsaturated alcohol with high degree of alkoxylation (65 - 150 repeating units) is selected from vinyl alcohol or vinyl-4-hydroxybutyl alcohol.

Further aspects of the present invention are the subject of further independent claims. Preferred embodiments of the present invention are the subject of the dependent claims.

### Ways for carrying out the invention

In a first aspect the present invention relates to a copolymer in particular a dispersant for mineral binders, comprising or consisting of
(i) monomeric units **A** of the general formula (I) 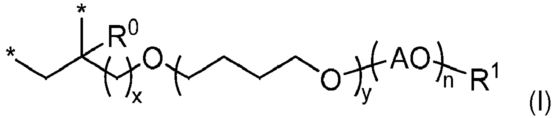 where
   R⁰ is H or methyl, R¹ is H, C1-C20 alkyl, aralkyl or aryl,
   A is an alkylene group with 2 - 4 C atoms,
   x = 0, 1 or 2,
   y = 0 or 1, and
   n = 20 - 60, preferably 40 - 60;
(ii) monomeric units **B** of the general formula (II) 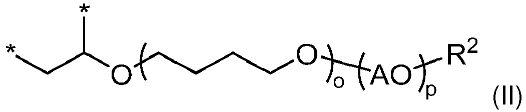 where
   R² is H, C1-C20 alkyl, aralkyl or aryl,
   A is an alkylene group with 2 - 4 C atoms,
   o = 0 or 1, and
   p = 65 - 150, preferably 120 - 140;
(iii) monomeric units **C** of the general formula (III) 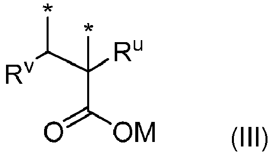 where, independently of one another,
   R^{u} is H or methyl,
   R^{v} is H or COOM,
   M is selected from H, alkali metal, alkali earth metal, ammonium, or organic ammonium group,
   and where * in structural formulae (I), (I)), and (III) describes the binding site into the polymer chain.

A copolymer of the present invention may be obtained by copolymerization of
(i) monomers **Aa** of general formula (Ia) 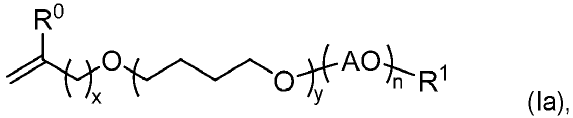 where
   R⁰ is H or methyl, R¹ is H, C1-C20 alkyl, aralkyl or aryl,
   A is an alkylene group with 2 - 4 C atoms,
   x = 0, 1 or 2,
   y = 0 or 1, and
   n = 20 - 60, preferably 40 - 60;
(ii) monomers **Bb** of general formula (IIa) 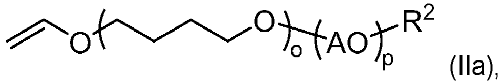 where
   R² is H, C1-C20 alkyl, aralkyl or aryl,
   A is an alkylene group with 2 - 4C atoms,
   o = 0 or 1, and
   p = 65 - 150, preferably 120 - 140; and
(iii) monomers Cc of general formula (IIIa) 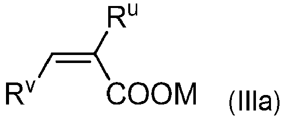 where, independently of one another,
   R^{u} is H or methyl,
   R^{v} is H or COOM,
   M is selected from H, alkali metal, alkali earth metal, ammonium, or organic ammonium group.

Suitable methods for the manufacture of copolymers of the present invention by copolymerization are known to the person skilled in the art. Especially, the copolymerization is a process of radical polymerization of the different monomers. Suitable conditions for a process of radical polymerization are for example described in example 1-1 of EP 1103570 (Nippon Shokubai Chem Ind) or in example 1 of WO 2012/084954 (Sika Technology AG). However, other methods of radical polymerization are likewise suitable.

According to some embodiments, copolymerization is carried out in the presence of an initiator for free radical polymerization at a reaction temperature of between 10°C and 50°C, preferably 15°C and 35°C. The term "initiator for free radical poldymerization" or "free radical initiator" in the present document is defined as a compound as described as an initiator in CD Rompp Chemie Lexikon, 9th edition, version 1.0, Georg Thieme Verlag, Stuttgart 1995, which is suitable for free radical polymerization. In particular the copolymerization is carried out in the presence of a mixture of iron(II) sulfate, hypophosphite, hydrogen peroxide, and sodium hydroxymethane sulfinate.

Copolymers of the present invention can be statistical copolymers or have a block-wise or gradient arrangement of the monomers.

Monomeric units **A** of the general formula (I) preferably are derived from ethoxylated, propoxylated, and/or butoxylated vinyl alcohol, allyl alcohol, methallyl alcohol, isoprenyl alcohol, and 4-hydroxybutylvinyl ether. It is possible that monomeric units of general formula (I) carry only ethylene oxide groups, or only propylene oxide groups, or only butylene oxide groups. It is likewise possible that monomeric units **A** of general formula (I) carry mixtures of ethylene oxide groups, propylene oxide groups, and/or butylene oxide groups, for example a mixture of ethylene oxide and propylene oxide groups or a mixture of ethylene oxide and butylene oxide groups.

Suitable monomeric units **B** of the general formula (II) preferably are derived from ethoxylated, propoxylated, and/or butoxylated vinyl alcohol and 4-hydroxybutylvinyl ether. It is possible that monomeric units **B** of general formula (II) carry only ethylene oxide groups, or only propylene oxide groups, or only butylene oxide groups. It is likewise possible that monomeric units **B** of general formula (II) carry mixtures of ethylene oxide groups, propylene oxide groups, and/or butylene oxide groups, for example a mixture of ethylene oxide and propylene oxide groups or a mixture of ethylene oxide and butylene oxide groups.

According to preferred embodiments, in a copolymer of the present invention the alkylene groups A in general formulas (I) and (II) in at least 66 mol%, preferably in at least 75 mol%, more preferably in at least 90 mol%, especially in at least 99 mol%, are ethylene groups.

Particularly preferably, within the present context monomeric units **A** of the general formula (I) are derived from ethoxylated vinyl alcohol or ethoxylated methallyl alcohol with a degree of ethoxylation of 40 - 60.

Particularly preferably, within the present context monomeric units **B** of the general formula (II) are derived from ethoxylated vinyl alcohol or ethoxylated 4-hydroxybutylvinyl ether with a degree of ethoxylation of 120 - 140.

Suitable monomeric units **C** of the general formula (III) are derived from acrylic acid and methacrylic acid and their salts of alkali metals, alkali earth metals, ammonium, or organic ammonium groups.

Thus, according to embodiments, suitable monomers **Aa** are ethoxylated, propoxylated, and/or butoxylated vinyl alcohol, allyl alcohol, methallyl alcohol, isoprenyl alcohol, and 4-hydroxybutylvinyl ether, suitable monomers **Bb** are ethoxylated, propoxylated, and/or butoxylated vinyl alcohol and 4-hydroxybutylvinyl ether, suitable monomers **Cc** are acrylic acid, methacrylic acid, and/or maleic acid and their salts of alkali metals, alkali earth metals, ammonium, or organic ammonium groups. It is, of course, also possible to use a mixture of two or more different acids as the monomers **Cc.** According to embodiments, the monomers **Cc** are acrylic acid. According to further embodiments, the monomers **Cc** are methacrylic acid. According to further embodiments, the monomers **Cc** are maleic acid. According to further embodiments, the monomers **Cc** are a mixture of acrylic acid and methacrylic acid. According to further embodiments, the monomers **Cc** are a mixture of acrylic acid and maleic acid. According to further embodiments, the monomers **Cc** are a mixture of methacrylic acid and maleic acid. According to further embodiments, the monomers **Cc** are a mixture of acrylic acid, methacrylic acid, and maleic acid.

According to other embodiments, a copolymer of the present invention is characterized in that in the general structures (I) to (III) R⁰ is methyl, R¹ and R² are H, A is ethylene, R^{u} is H or methyl, R^{v} is H or COOM, M is selected from H, alkali metal, alkali earth metal, or organic ammonium group, x = 1, y = 0, n = 20 - 40, o = 0 or 1, and p = 65 - 140.

According to embodiments, a copolymer of the present invention is characterized in that in the general structures (I) to (III) R⁰ is methyl, R¹ and R² are H, A is ethylene, R^{u} is H or methyl, R^{v} is H or COOM, M is selected from H, alkali metal, alkali earth metal, or organic ammonium group, x = 1, y = 0, n = 40 - 60, o = 0 or 1, and p = 65 - 140.

According to other embodiments, a copolymer of the present invention is characterized in that in the general structures (I) to (III) R⁰, R¹ and R² are H, A is ethylene, R^{u} is H or methyl, R^{v} is H or COOM, M is selected from H, alkali metal, alkali earth metal, or organic ammonium group, x = 0, y = 0 or 1, n = 20 - 40, o = 0 or 1, and p = 65 - 140.

According to other embodiments, a copolymer of the present invention is characterized in that in the general structures (I) to (III) R⁰, R¹ and R² are H, A is ethylene, R^{u} is H or methyl, R^{v} is H or COOM, M is selected from H, alkali metal, alkali earth metal, or organic ammonium group, x = 0, y = 0 or 1, n = 40 - 60, o = 0 or 1, and p = 65 - 140.

The molar ratios of monomeric units of structural formulae (I), (II), and (III) in a copolymer of the present invention can be expressed as molar ratio **a** : **b** : **c.** Therein, **a** shall mean the molar fraction of monomeric units **A** of structural formula (I), **b** shall mean the molar fraction of monomeric units **B** of structural formula (II) and **c** shall mean the molar fraction of monomeric units **C** of structural formula (III).

According to embodiments, a copolymer of the present invention is characterized in that the molar ratio **a** : **b** : **c** is in the range of 0.01 - 0.9 : 0.9 - 0.01 : 1, preferably in the range of 0.04 - 0.5 : 0.5 - 0.06 : 1, especially in the range of 0.03 - 0.08 : 0.09 - 0.12 : 1.

It is generally preferred that the molar ratio of monomeric units **C** is higher than the molar ratio of the monomeric units **A** and/or monomeric units **B.** According to certain embodiments, a copolymer of the present invention is characterized in that the ratio of monomeric units **C** relative to all monomeric units constituting the copolymer, is between 50 - 99 mol%, preferably is between 66 - 99 mol%, especially is between 75 - 99 mol%.

According to embodiments, in a copolymer of the present invention, the molar ratio of monomeric units **A** to monomeric units **B** is greater than 0.1, preferably is greater than 0.5, more preferably is greater than 1, especially is greater than 3.

The molecular weight M_{w} of a copolymer of the present invention can be measured by GPC using PEG as a standard and may be in the range of 5000 - 200000 g/mol, preferably 10000 - 150000 g/mol.

Optionally, copolymers of the present invention may comprise additional monomeric units, different from monomeric units **A, B,** or **C.** According to embodiments, a copolymer of the present invention may additionally comprise monomeric units derived from monomers selected from esters of (meth)acrylic acid, especially hydroxyalkyl esters of (meth)acrylic acid such as 2-hydroxyethyl acrylate or 3-hydroxypropyl acrylate, (meth)acrylamide and its alkyl amides, 2-acrylamido-2-methylpropanesulfonic acid, alkylene phosphate or phosphonate, especially vinyl phosphate, N-vinylformamide, N-vinylacetamide, N-vinylpyrrolidone, N-vinylcaprolactame, (meth)alyyl alcohol, hydroxyvinylethylether, hydroxyvinylpropylether, , hydroxyvinylbutylether, 3-methyl-3-buten-1-ol, styrene, and/or butadiene.

Where such additional monomeric units are present, their molar ratio preferably is not higher than 33 mol%, more preferably not higher than 25 mol%, relative to all monomeric units of the copolymer. It is generally preferred, that copolymers of the present invention are essentially free of any additional monomeric units besides monomeric units **A, B,** and **C.** It is especially preferred, that copolymers of the present invention consist of monomeric units **A, B,** and **C.**

According to embodiments, copolymers of the present invention are in the form of a dispersion or a solution in a liquid, preferably in water. Such dispersion or solution in a liquid, preferably in water, can be obtained by copolymerization of the respective monomers directly in the liquid, preferably directly in water. It is also possible to disperse or dissolve copolymers of the present invention in a liquid, preferably in water, to obtain copolymer dispersions or solutions.

According to other embodiments, copolymers of the present invention are in a solid state at 25°C and 1023 mbar. A solid state preferably is a free-flowing powder or flakes. Copolymers in a solid state can be especially useful, where such copolymers are to be mixed with other dry ingredients to form dry concrete or dry mortars. The shelf life of such dry concrete or dry mortar can be improved if the copolymer of the present invention is used therein in solid form.

Means to produce copolymers of the present invention in solid form are not particularly limited and are known to the person skilled in the art per se. Such means include spray drying, oven drying, flaking, etc of dispersions or solutions of copolymers in a liquid.

In a second aspect the present invention relates to the use of a copolymer as described above as an admixture in mineral binder compositions.

All embodiments as described above also apply to this aspect.

A mineral binder composition within the present context is a composition comprising at least one mineral binder. Mineral binders especially are hydraulic binders (e.g. cement or hydraulic lime), latent hydraulic binders (e.g. slag), pozzolanic binders (e.g. fly ash, clays) or nonhydraulic binders (e.g. gypsum plaster or white lime).

According to embodiments, the mineral binder composition comprises a hydraulic binder, preferably cement. Particular preference is given to a cement having a cement clinker content of ≥ 35% by weight. In particular, the cement is of the type CEM I, II, III, IV or V according to the standard EN 197-1 or a calcium aluminate cement according to the standard EN 14647:2006-01 or a calcium sulphoaluminate cement or a mixture thereof. A proportion of the hydraulic binder in the total mineral binder is advantageously at least 5% by weight, in particular at least 20% by weight, preferably at least 35% by weight, especially at least 65% by weight. In a further advantageous embodiment, the mineral binder consists to an extent of at least 95% by weight of a hydraulic binder, in particular cement clinker.

In one advantageous embodiment the cement additionally contains up to 40 w%, preferably up to 35 w%, especially up to 20 w%, each based on the total dry weight of the cement, of a calcium sulfate. The calcium sulfate may be present in the form of calcium sulfate-hemihydrate, calcium sulfate-dihydrate and/or anhydrite.

According to further embodiments the mineral binder composition comprises other binders in addition to or instead of a hydraulic binder. These are, in particular, latent hydraulic binders and/or pozzolanic binders. Suitable latent hydraulic and/or pozzolanic binders are, for example, slag, clays, especially calcined clays, fly ash, silica dust, silica fume, rice husk shale, burnt shale, trass, and pumice. In an advantageous embodiment, the mineral binder contains 5-95% by weight, in particular 5-65% by weight, especially 15-35% by weight of latent hydraulic and/or pozzolanic binders, relative to the total dry weight of the mineral binder.

The mineral binder composition of the present invention may also be based on calcium sulfate and/or lime as a mineral binder. Calcium sulfate is meant to encompass any of anhydrite, alpha- and beta-calcium sulfate hemihydrate, and/or calcium sulfate dihydrate. Lime is meant to encompass any of hydraulic lime, air lime, and/or natural hydraulic lime.

Copolymers of the present invention are used in a mineral binder composition in an amount of 0.01 w% - 10 w%, preferably 0.1 - 2 w%, relative to the total weight of the mineral binder.

In another aspect the present invention thus also relates to a mineral binder composition comprising at least one mineral binder and 0.01 w% - 10 w%, preferably 0.1 - 2 w%, relative to the total weight of the mineral binder, of a copolymer as described above.

A mineral binder composition of the present invention may also comprise further ingredients. Preferably, such further ingredients are selected from at least one of aggregates, fillers, additives, and water.

The term aggregate as used in the context of the present invention refers to mineral materials that are non-reactive in the hydration reaction of mineral binders. Aggregates can be any aggregate typically used for cementitious materials such as concrete, mortars, screeds, renders, grouts, coatings, putties or the like. Typical aggregates are for example rock, crushed stone, gravel, limestone, sand, recycled concrete, perlite or vermiculite.

Fillers, within the present context, are mineral additions of low particle size that have no cementitious properties. Typical fillers are finely ground calcium carbonates.

Additives can be any additives typically used in the concrete or mortar industry. Typical additives include plasticizers, thickeners, retarders, air-entrainers, deaerating agents, corrosion inhibitors, fibers, expansion producing additives, pigments, strength enhancers, waterproofing additives, alkali-aggregate reaction inhibitors, chromate reducers, and/or anti-microbial agents.

According to embodiments, a mineral binder composition of the present invention is characterized in that it additionally comprises at least one of aggregates, fillers, additives, and water.

Copolymers of the present invention have the effect of increasing the initial slump flow and/or retaining the slump flow of a mineral binder composition over long periods of time. Slump flow can be measured according to standard EN 12350-5.

Especially the slump flow of a mineral binder composition comprising an inventive copolymer is increased initially and/or is retained over longer periods of time as compared to the same mineral binder composition but comprising a polycarboxylate ether type copolymer that is not according to the invention. Thus, copolymers of the present invention are used as an admixture for mineral binder compositions to increase the initial slump flow and/or to increase the retention of slump flow over time.

The present invention thus also relates to a method to increase the slump flow of a mineral binder composition, said method comprising the steps of
(i) providing a mineral binder or a mineral binder composition,
(ii) providing a copolymer as described above, and
(iii) intermixing the said copolymer and mineral binder or mineral binder composition.

The use of mineral binder compositions of the present invention is not particularly limited. Typically, mineral binder compositions of the present invention can be used as a concrete, a mortar, a screed, a render, a plaster, a grout, an adhesive, a waterproofing membrane, an underlayment, or a water plug.

Therefore, in another aspect, the present invention also relates to the use of a mineral binder composition as described above as a concrete, a mortar, a screed, a render, a plaster, a grout, an adhesive, a waterproofing membrane, an underlayment, or a water plug.

### Examples

### Preparation of copolymer CP-1

Copolymers were prepared by free radical polymerization. Therefore, a glass reactor with a thermometer, a stirrer, a dropping funnel, and a reflux condenser was charged with 500 g of methallyl polyethylene glycol (OH-terminated, M_{w} = 2400 g/mol), 53 g of acrylic acid, and 500 g of water. 1.25 g of a 10% aqueous solution of Fe(II) sulfate •7 H₂O and 1.7 g of sodium hypophosphite were added. This mixture was heated to 35°C and then 8.5 g of a 30% aqueous hydrogen peroxide solution, and 3.5 g of a 5% aqueous solution of sodium hydroxymethane sulfinate were slowly added dropwise. After complete addition, the reaction temperature was kept at 40 °C for 120 minutes. The resultant mixture was cooled to below 30 °C and neutralized with NaOH. A clear viscous solution of Polymer CP-1 was obtained. Polymer CP-1 is a comparison and is not according to the present invention.

### Preparation of Copolymer CP-2

Copolymer CP-3 was prepared in the same way as copolymer CP-1, except that 500 g of vinyloxybutyl polyethylene glycol (OH-terminated, M_{w} = 6000 g/mol) was used instead of 500 g of methallyl polyethylene glycol (OH-terminated, M_{w} = 2400 g/mol). A clear viscous solution of Polymer CP-3 was obtained. Polymer CP-3 is a comparison and is not according to the present invention.

### Preparation of Copolymer P-1

Copolymer P-1 was prepared in the same way as copolymer CP-1, except that 500 g of a mixture of 80 weight parts of methallyl polyethylene glycol (OH-terminated, M_{w} = 2400 g/mol) and 20 weight parts of vinyloxybutyl polyethylene glycol (OH-terminated, M_{w} = 3000 g/mol) was used instead of 500 g of methallyl polyethylene glycol (OH-terminated, M_{w} = 2400 g/mol). A clear viscous solution of Polymer P-1 was obtained. Polymer P-1 is according to the present invention.

### Preparation of Copolymer P-2

Copolymer P-2 was prepared in the same way as copolymer CP-1, except that 500 g of a mixture of 50 weight parts of methallyl polyethylene glycol (OH-terminated, M_{w} = 2400 g/mol) and 50 weight parts of vinyloxybutyl polyethylene glycol (OH-terminated, M_{w} = 3000 g/mol) was used instead of 500 g of methallyl polyethylene glycol (OH-terminated, M_{w} = 2400 g/mol). A clear viscous solution of Polymer P-2 was obtained. Polymer P-2 is according to the present invention.

### Preparation of Copolymer P-3

Copolymer P-4 was prepared in the same way as copolymer CP-1, except that 500 g of a mixture of 20 weight parts of methallyl polyethylene glycol (OH-terminated, M_{w} = 2400 g/mol) and 80 weight parts of vinyloxybutyl polyethylene glycol (OH-terminated, M_{w} = 6000 g/mol) was used instead of 500 g of methallyl polyethylene glycol (OH-terminated, M_{w} = 2400 g/mol). A clear viscous solution of Polymer P-4 was obtained. Polymer P-4 is according to the present invention.

### Preparation of Copolymer P-4

Copolymer P-5 was prepared in the same way as copolymer CP-1, except that 500 g of a mixture of 20 weight parts of vinyloxybutyl polyethylene glycol (OH-terminated, M_{w} = 3000 g/mol) and 80 weight parts of vinyloxybutyl polyethylene glycol (OH-terminated, M_{w} = 6000 g/mol) was used instead of 500 g of methallyl polyethylene glycol (OH-terminated, M_{w} = 2400 g/mol). A clear viscous solution of Polymer P-5 was obtained. Polymer P-5 is according to the present invention.

### Preparation of test mortars

Mortars C1 - C2 and E1 - E4 were prepared by mixing 750n g of cement (CEM I 52.5R from Vigier), 141 g of limestone filler, 738 g of sand (0 - 1mm), 1107 g of sand (1 - 4 mm), and 1154 g of sand (4 - 8 mm) on a Hobart mixer at 25 °C for 1 minute dry. Then, the respective copolymer as indicated in below table 1 and water were added within 30 seconds. The amount of copolymer added was 1 w% relative to cement in all cases, where the 1w% relates to the dry matter of the aqueous polymer solutions, i.e. to the actual amount of the respective copolymer added. The amount of water added was such that a weight ratio of water to cement (w/c ratio) of 0.39 resulted. The amount of water added with the aqueous copolymer solutions was also calculated for this w/c ratio. Mixing was then continued for 2.5 minutes. Mortar compositions C1 - C2 are comparative and not according to the present invention, while mortar compositions E1 - E4 are according to the present invention.

Copolymers tested had different ratios of monomeric units **A, B,** and **C** (varying molar ratios **a** : **b** : **c).** However, the charge density of copolymers tested was 1.3 in all cases. Charge density of copolymers is calculated from the respective molar ratios **a** : **b** : **c** as well as molecular weights as mol COOH-groups per g of polymer.

Slump flow (abbreviated S.F. in table 1) of the respective cement pastes was measured according to EN 12350-5 after the times indicated in table 1. The cement pastes were re-mixed for 30 seconds prior to measurements.

Compressive strength (abbreviated C.S. in table 1) was measured according to EN 12190 on 4x4x16cm prisms after the time indicated in the below table 1.

Setting time was deduced from the cumulative heat flow curves determined by integration of heat flow curves measured in an isothermal process as described in standard ASTM C1702-17 using an instrument i-CAL 8000 from Calmetrix. The setting time is the time when the cumulative heat flow curve reaches a plateau.

The following table 1 shows the results.

**Table 1: Test results**

| **Example** | **C1** | **C2** | **E1** | **E2** | **E3** | **E4** |
|---|---|---|---|---|---|---|
| Copolymer | CP-1 | CP-2 | P-4 | P-1 | P-2 | P-3 |
| S.F. @ 0 min [mm] | 208 | 187 | 216 | 238 | 207 | 216 |
| S.F. @ 30 min [mm] | 205 | 212 | 231 | 241 | 217 | 213 |
| S.F. @ 60 min [mm] | 195 | 197 | 224 | 229 | 204 | 205 |
| Δ S.F.* | -6% | +5% | +4% | -4% | -1% | -5% |
| Setting time [h] | 10.5 | n.m. | 7.6 | 8.8 | 8.8 | 8.2 |
| C.S. @ 8 h [MPa] | 2.6 | 12.5 | 8.0 | 4.6 | 4.5 | 7.5 |

| | | | | | | |
|---|---|---|---|---|---|---|
| n.m.: not measured * Δ S.F.: slump flow over time, calculated as follows: [("slump flow 0 min" - "slump flow 60 min") / "slump flow 0 min")] * -100 negative values are loss of slump flow over time positive values are increase in slump flow overtime | | | | | | |

The results of table 1 show that polymers of the state of the art lead to satisfying initial slump flow but show significant slump loss over time and also show comparatively low compressive strength (cf example C1). Polymers of the state of the art having a longer side chain can lead to an increase in compressive strength but also show reduced initial slump flow (cf example C2 vs C1). Copolymers of the present invention were able to increase the initial slump flow as compared to copolymers of the state of the art while maintaining a comparatively high compressive strength (cf examples E1 to E4). At the same time the loss in slump flow over time, when using copolymers of the present invention, was on a level which is perfectly acceptable for practical applications and lower as compared to copolymers of the state of the art.

## Claims

1. A copolymer, in particular a dispersant for mineral binders, comprising or consisting of
(i) monomeric units **A** of the general formula (I) 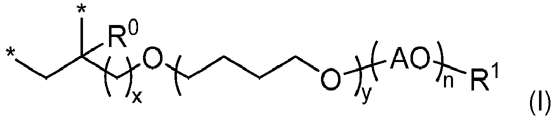 where
R⁰ is H or methyl, R¹ is H, C1-C20 alkyl, aralkyl or aryl,
A is an alkylene group with 2 - 4C atoms,
x = 0, 1 or 2,
y = 0 or 1, and
n = 20 - 60, preferably 40 - 60;
(ii) monomeric units **B** of the general formula (II) 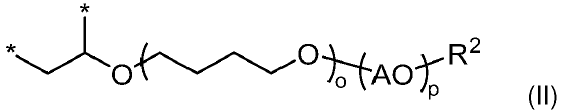 where
R² is H, C1-C20 alkyl, aralkyl or aryl,
A is an alkylene group with 2 - 4C atoms,
o = 0 or 1, and
p = 65 - 150, preferably 120 - 140, and
(iii) monomeric units C of the general formula (III) 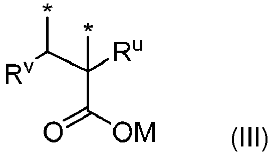 where, independently of one another,
R^{u} is H or methyl,
R^{v} is H or COOM,
M is selected from H, alkali metal, alkali earth metal, ammonium, or organic ammonium group,
and where * in structural formulae (I), (I), and (III) describes the binding site into the polymer chain.

2. A copolymer as claimed in claim 1, **characterized in that** in the general structures (I) to (III) R⁰ is methyl, R¹ and R² are H, A is ethylene, R^{u} is H or methyl, R^{v} is H or COOM, M is selected from H, alkali metal, alkali earth metal, or organic ammonium group, x = 1, y = 0, n = 40 - 60, o = 0 or 1, and p = 65 - 140.

3. A copolymer as claimed in claim 1, **characterized in that** in the general structures (I) to (III) R⁰, R¹ and R² are H, A is ethylene, R^{u} is H or methyl, R^{v} is H or COOM, M is selected from H, alkali metal, alkali earth metal, or organic ammonium group, x = 0, y = 0 or 1, n = 40 - 60, o = 0 or 1, and p = 65 -140.

4. A copolymer as claimed in claim 1, where the alkylene groups A in general formulas (I) and (II) in at least 66 mol%, preferably in at least 75 mol%, more preferably in at least 90 mol%, especially in at least 99 mol%, are ethylene groups.

5. A copolymer as claimed in any of the preceding claims, **characterized in that** the molar ratios of the monomeric units **a** : **b** : **c** are in the range of 0.01 - 0.9 : 0.9 - 0.01 : 1, preferably in the range of 0.04 - 0.5 : 0.5 - 0.06 : 1, especially in the range of 0.03 - 0.08 : 0.09 - 0.12 : 1.

6. A copolymer as claimed in any of the preceding claims, **characterized in that** it additionally comprises units derived from monomers selected from esters of (meth)acrylic acid, especially hydroxyalkyl esters of (meth)acrylic acid such as 2-hydroxyethyl acrylate or 3-hydroxypropyl acrylate, (meth)acrylamide and its alkyl amides, 2-acrylamido-2-methylpropanesulfonic acid, alkylene phosphate or phosphonate, especially vinyl phosphate, N-vinylformamide, N-vinylacetamide, N-vinylpyrrolidone, N-vinylcaprolactame, (meth)alyyl alcohol, hydroxyvinylethylether, hydroxyvinylpropylether, , hydroxyvinylbutylether, 3-methyl-3-buten-1-ol, styrene, and/or butadiene.

7. A copolymer as claimed in any of the claims 1 - 6, **characterized in that** the copolymer is in powder form.

8. A copolymer as claimed in any of the claims 1 - 6, **characterized in that** the copolymer is in the form of a dispersion or solution in a liquid, preferably water.

9. A copolymer as claimed in any of the preceding claims, **characterized in that** the ratio of monomer units c relative to all monomers constituting the copolymer, is between 50 - 99 mol%, preferably is between 66 - 99 mol%, especially is between 75 - 99 mol%.

10. A copolymer as claimed in any of the preceding claims, **characterized in that** the molar ratio of monomeric units **a** to monomeric units **b** is greater than 0.1, preferably is greater than 0.5, more preferably is greater than 1, especially is greater than 3.

11. Use of a copolymer as claimed in any of claims 1 - 10 as an admixture in mineral binder compositions.

12. A mineral binder composition comprising at least one mineral binder and 0.01 w% - 10 w%, preferably 0.1 - 2 w%, relative to the total weight of the mineral binder, of a copolymer as claimed in any of claims 1 - 10.

13. A mineral binder composition according to claim 12, **characterized in that** it additionally comprises at least one of aggregates, fillers, additives, and water.

14. Use of a mineral binder composition as claimed in any of claims 12 - 13 as a concrete, a mortar, a screed, a render, a plaster, a grout, an adhesive, a waterproofing membrane, an underlayment, or a water plug.
